# EUROPEAN PATENT APPLICATION

(11) **EP 4 099 544 A1**
(43) Date of publication of application: **07.12.2022**
(21) Application number: 21747385.9
(22) Date of filing: 19.01.2021
(51) Int. Cl.: H02K 3/22, H02K 15/04, H01F 5/00, H01F 41/04

(54) **COIL, AND METHOD FOR MANUFACTURING SAME**

(30) Priority: 30.01.2020 JP 2020013218
(71) Applicant: Hongo, Takenobu, Ishikawa-gun, Fukushima 963-8302 (JP)
(72) Inventor: Hongo, Takenobu, Ishikawa-gun, Fukushima 963-8302 (JP)
(74) Representative: TBK
(86) International application number: PCT/JP2021/001673
(87) International publication number: WO 2021/153347

(57) **Abstract**

Provided are a coil (10) capable of further improvement in heat dissipation performance and a method for manufacturing the same.

A coil (10) includes a helical structure formed of a hollow flat conductor (22).

## Description

### Technical Field

The present invention relates to a coil and a method for manufacturing the same.

### Background Art

Examples of coil apparatuses including a coil disposed around a core (stator core) of a stator core (stator) include electrical devices such as a motor, a generator, and a transformer. To improve the efficiency of such a coil apparatus, there has been developed a coil of which the space factor in a core is improved for improved heat dissipation performance (for example, see Patent Literature 1).

### Citation List

### Patent Literature

Patent Literature 1: Japanese Patent No. 5592554

### Summary of Invention

### Technical Problem

However, in the case of a coil apparatus such as an on-vehicle motor, even higher efficiency and lighter weight are demanded, and there has been a demand to further improve the heat dissipation performance of the coil constituting the same.

In view of the foregoing circumstances, the present invention aims at providing a coil capable of further improvement in heat dissipation performance and a method for manufacturing the same.

### Solution to Problem

The present invention relates to a coil including a helical structure formed of a hollow flat conductor.

The present invention also relates to a coil constituting a stator, wherein a helical structure is formed of a hollow conductor.

The present invention also relates to a method for manufacturing a coil, including a step of forming a helical structure body of a first metal member, a step of coating a surface of the first metal member with a second metal member, and a step of dissolving the first metal member to make the helical structure body hollow.

### Advantageous Effects of Invention

According to the present invention, a coil capable of further improvement in heat dissipation performance and a method for manufacturing the same can be provided.

### Brief Description of Drawings

FIG. 1 includes schematic diagrams illustrating a coil of the present embodiment, in which (A) is a plan view thereof, (B) is a side view thereof, (C) is a cross-sectional view thereof, and (D) is a cross-sectional view thereof.
FIG. 2 is a flowchart showing an example of the flow of a method for manufacturing the coil of the present embodiment.
FIG. 3 includes diagrams illustrating coil pieces of the present invention, in which (A) is a plan view thereof, (B) is a cross-sectional view thereof, and (C) to (G) are plan views thereof.
FIG. 4 includes diagrams illustrating the method for manufacturing the coil of the present embodiment, in which (A) to (C) are plan views thereof, and (D) to (G) are side views thereof.
FIG. 5 includes development plan views illustrating the method for manufacturing the coil of the present embodiment.
FIG. 6 includes cross-sectional views illustrating the method for manufacturing the coil of the present embodiment.
FIG. 7 includes diagrams illustrating a coil of another embodiment, in which (A) is a cross-sectional view thereof, and (B) is a plan view thereof.

### Description of Embodiments

Embodiments of the present invention will be described below with reference to the drawings.

### <First Embodiment>

### <Coil>

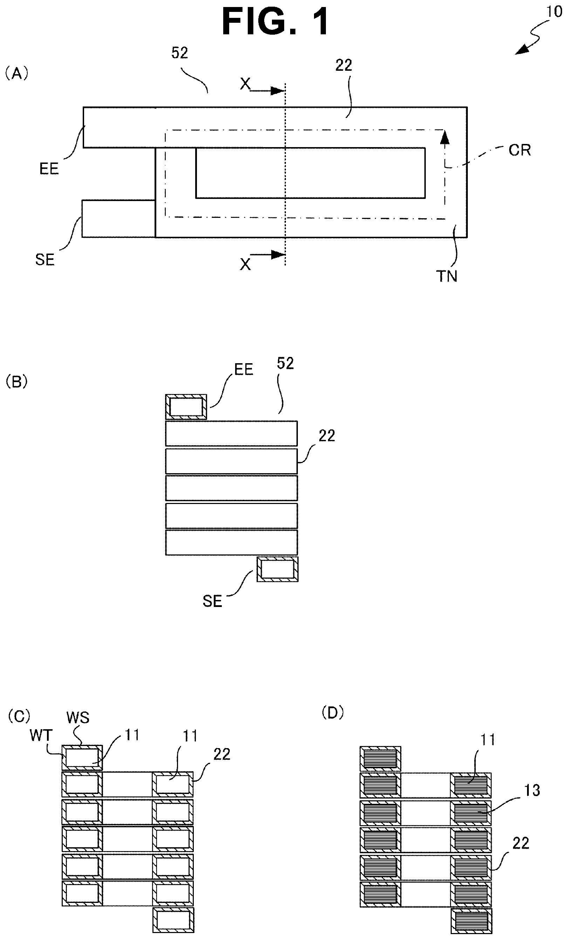

FIG. 1 includes schematic diagrams illustrating a coil 10 of a first embodiment of the present invention. FIG. 1(A) is a plan view seen in a helical axis direction, FIG. 1(B) is a schematic side view seen from the left in FIG. 1(A), and FIGS. 1(C) and 1(D) are schematic cross-sectional views taken along line X-X of FIG. 1(A).

For example, the coil 10 of the present embodiment is a so-called concentrated winding edgewise coil including a helical structure formed of a flat conductor 22, and wound so that the axes of the turns of the helical structure are substantially the same (the turns substantially overlap with each other in the helical axis direction of the coil 10).

The flat conductor 22 is a metal member with favorable conductivity (such as copper [Cu]). However, metal members other than copper (such as aluminum [Al]) may be used.

As illustrated in FIG. 1(A), a region for one turn of the helical structure (region indicated by dot-dashed lines in the diagram; hereinafter, referred to as a region CR for one turn) of the coil 10 has a substantially rectangular shape, for example. More specifically, the region CR for one turn of a helical structure body 52 has substantially right-angle corner portions, and is (substantially) rectangular in shape on both the outer peripheral side and the inner peripheral side when seen in a plan view in the axial direction of the helical structure body 52.

Configuring the region CR for one turn of the helical structure body 52 in the substantially right-angled rectangular shape on both the outer peripheral side and the inner peripheral side can increase the space factor of the coil 10 when the coil 10 is attached to a not-illustrated stator core, for example. In other words, the absence of unnecessary space between the core and the coil 10 avoids a phenomenon of heat retention in the space and improves heat dissipation performance. Since resistance due to heat accumulation by the coil 10 can thereby be reduced, the efficiency of a coil apparatus in which the coil 10 is incorporated (such as a motor) can be improved.

Moreover, as illustrated in FIG. 1(C), the helical structure of the coil 10 of the present embodiment has a hollow inside 11. More specifically, the flat conductor 22 constituting the coil 10 is a flattened pipe with a substantially rectangular shape (or substantially O-shape of a curved-cornered rectangle) when seen in a sectional view as illustrated in FIG. 1(C).

The inside 11 of the helical structure body 52 desirably includes a hollow area continuous from one end to the other end of the helical structure body 52 in the helical traveling direction (from a starting end portion SE to a terminal end portion EE of the flat conductor 22 in the longitudinal direction) without shielding or disconnection at any point.

For example, not-illustrated terminals are disposed on both end portions (the starting end portion SE and the terminal end portion EE) of the helical structure body 52 in the helical traveling direction.

As described above, since the coil 10 of the present embodiment is configured so that the inside 11 of the helical structure body 52 is hollow, air can flow in the inside 11. In other words, heat can be transferred (dissipated) with air movement in the inside 11 by the principle of a so-called heat pipe, and the efficiency of heat transfer (dissipation) can thus be improved as compared to a case where the inside 11 is filled with metal. In particular, if the helical structure body 52 has a localized hot area, like near the center of the helical structure body 52 in the helical traveling direction (only when it becomes a high temperature), the heat can be transferred from the hot area to areas of relatively low temperature (such as near the terminals) with high efficiency. In other words, not only the shape of the coil 10 but the principle of the heat pipe can further improve the heat dissipation performance to prevent an increase in the resistance of the coil 10 due to heat accumulation, and the efficiency of the coil apparatus such as a motor can thus be improved.

Moreover, as illustrated in FIG. 1(D), the inside 11 of the coil 10 may be filled with a liquid 13. The liquid 13 serves as a refrigerant (operating fluid). An example is water. However, the liquid 13 may be any fluid capable of heat transfer and is not limited to water. The injection of the liquid 13 serving as the refrigerant (operating fluid) enables heat transfer with even higher efficiency.

The liquid 13 is sealed in the inside 11 by connecting both end portions SE and EE of the helical structure body 52 to terminals (not illustrated) or the like.

Although not illustrated, the entire coil 10 of the present embodiment is further coated with a resin. The resin covers the entire helical structure body 52 (flat conductor 22). More specifically, the regions CR for the respective turns of the helical structure body 52 are individually coated, and the one-turn regions CR overlapping in the axial direction (the one-turn region CR in one layer and the one-turn region CR in a layer continuous with the layer) are insulated by the resin.

As described above, the coil 10 of the first embodiment is not limited in application to a coil apparatus such as a stator and a motor, and can be applied to any other apparatuses. The coil 10 is not limited to electrical elements, either, and can be applied as a mean to produce elasticity, for example, a coil spring.

### <Method for Manufacturing Coil>

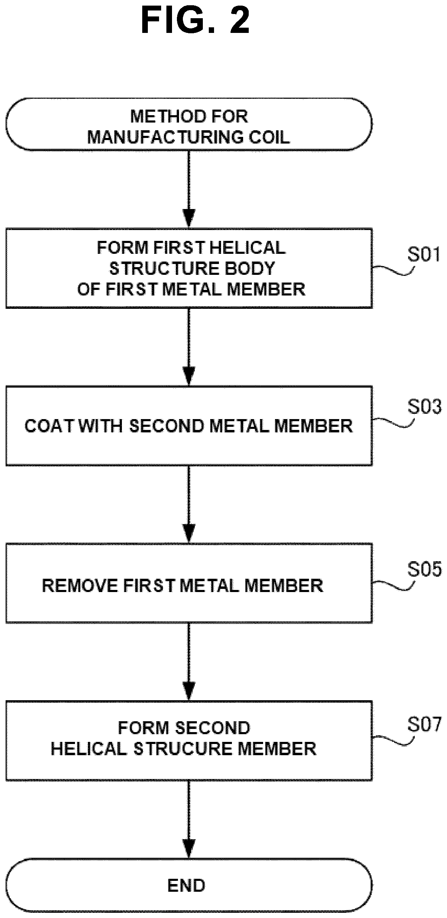

A method for manufacturing the coil 10 of the present embodiment will be described with reference to FIGS. 2 to 6. FIG. 2 is a flowchart showing an example of the processing flow of the method for manufacturing the coil 10. As illustrated in FIG. 2, the method for manufacturing the coil 10 includes a step of forming a first helical structure body 51 of a first metal member 21 (step S01), a step of covering the surface of the first metal member 21 with a second metal member 22 (step S03), and a step of removing the first metal member 21 (step S05) to form the second helical structure body 52 of the second metal member 22 that is hollow (step S07).

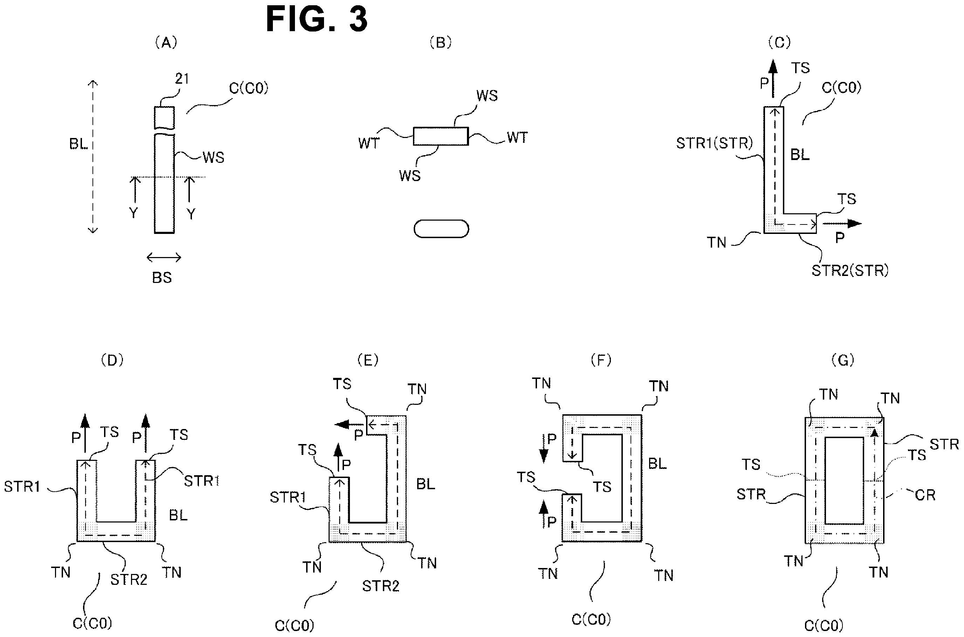

A method for manufacturing the first helical structure body 51 (step S01 of FIG. 2) will initially be described with reference to FIGS. 3 to 5. FIG. 3 includes schematic diagrams illustrating an example of a conductor C for forming the first helical structure body 51. FIG. 3(A) is a plan view illustrating the conductor C when the first helical structure body 51 is seen in the axial direction. FIG. 3(B) is a cross-sectional view taken along line Y-Y of FIG. 3(A). FIGS. 3(C) to 3(G) are plan views similar to FIG. 3(A).

The first helical structure body 51 is formed by preparing a plurality of strip-shaped conductors C formed of the first metal member 21, and successively pressing end faces TS of the conductors C in the strip longitudinal direction against each other.

As illustrated in FIG. 2, a conductor C is a strip-shaped member that is long in a predetermined direction (for example, vertical direction in the diagram) and which has a strip longitudinal direction BL and a strip transverse direction BS. A description will be given by using a case in which the conductor C is a (substantially) rectangular conductor (flat conductor) C as an example. When the conductor C is cut in a direction (strip transverse direction BS) intersecting (orthogonal to) the straight portion in the strip longitudinal direction BL (traveling direction of the helical structure), the cut section (cross section taken along the line X-X, or cross section parallel to the strip transverse direction BS) includes two opposed wider surfaces WS and two opposed narrower surfaces WT as illustrated at the top in FIG. 3(B). However, the conductor C may be a rectangular flat conductor C with rounded corner portions as illustrated at the bottom in FIG. 3(B). The (flat) conductor C may hereinafter be referred to as a coil piece C.

Each coil piece C of the present embodiment is formed of the first metal member (for example, aluminum [Al]) 21, for example. More specifically, the coil piece C is obtained by punching an aluminum plate (with a thickness of approximately 0.1 mm to 5 mm, for example) into a desired shape.

As illustrated in FIGS. 3(C) to 3(F), at least some of the coil pieces C have straight portions STR and at least one direction changing portion TN (illustrated by dot hatching). The direction changing portion TN is a portion bent to change the extending direction of the strip longitudinal direction.

More specifically, the coil pieces C in this example have at least a first straight portion STR1 extending in a first direction along the strip longitudinal direction BL (illustrated in a large broken line), a second straight portion STR2 extending in a second direction, and a direction changing portion TN located between the first straight portion STR1 and the second straight portion STR2.

The surfaces at both ends of a coil piece C in the strip longitudinal direction BL (the surfaces of the ends parallel to cut sections orthogonal to the strip longitudinal direction BL) will hereinafter be referred to as end faces TS. The end faces TS of the coil pieces C of the present embodiment are located in straight portions excluding the direction changing portions TN of the coil pieces C.

The straight portions STR (first straight portion STR1 and second straight portion STR2) are portions continuous with respective end faces TS and including a straight area longer than the amount of pressure welding (pressing length) by pressing in the direction along the strip longitudinal direction BL. Specifically, the coil pieces C are all pressed in a pressing direction P along the strip longitudinal direction BL and successively connected.

The coil pieces C including the direction changing portions TN are bent in the same direction (in a plan view, constantly to the right or the left) along the strip longitudinal direction BL to form a helical shape when connected. At least one (preferably all) of the direction changing portions TN is desirably a corner portion of noncurved (for example, substantially right-angle) shape. In this example, as illustrated by the hatching in FIG. 3(D), the direction changing portions TN are substantially square areas. The direction changing portions TN can be formed as corner portions of substantially right-angle shape by stamping the coil pieces C out of a metal member.

More specifically, at least some of the coil pieces C have one of the following shapes: an L-shape with one direction changing portion TN (FIG. 3(C)); a U-shape with two direction changing portions TN (FIG. 3(D)); a C-shape with three direction changing portions TN (FIG. 3(E)); and a C shape with four direction changing portions TN (FIG. 3(G)). All the coil pieces C may have the same shape, or combine any of the shapes of FIGS. 3(C) to 3(F). Coil pieces C which have at least one of the shapes of FIGS. 3(C) to 3(F) may be combined with a straight (I-shaped) coil piece C which has no direction changing portion TN. Although not illustrated in the drawings, a coil piece C may have an O-shape with four direction changing portions TN. In the following example, all the coil pieces C are described to have the U-shape illustrated in FIG. 3(D).

As illustrated in FIG. 3(G), the end faces TS of such coil pieces (flat conductors) C in the helical traveling direction are butted against and pressure welded (for example, cold pressure welded) to each other, whereby the first helical structure body 51 is formed. More specifically, the plurality of strip-shaped flat conductors (coil pieces) C are connected together along the strip longitudinal direction BL (helical traveling direction) at their straight portions STR, and the end faces TS in the helical traveling direction are butted and pressed (pressure welded, e.g., cold pressure welded) against each other in the pressing direction P, whereby one-turn regions CR for a desired number of turns are successively connected to form a helical structure.

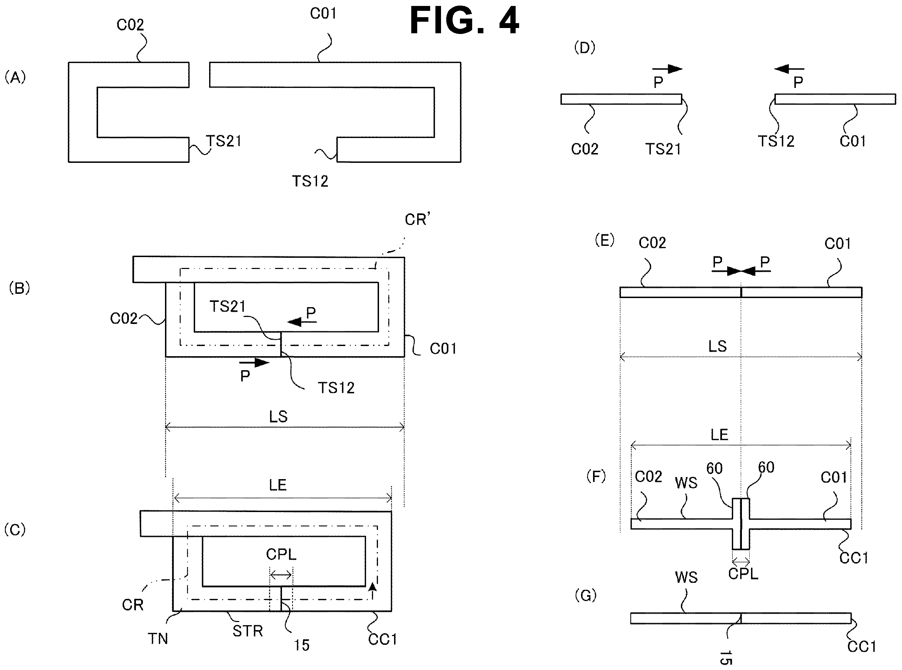

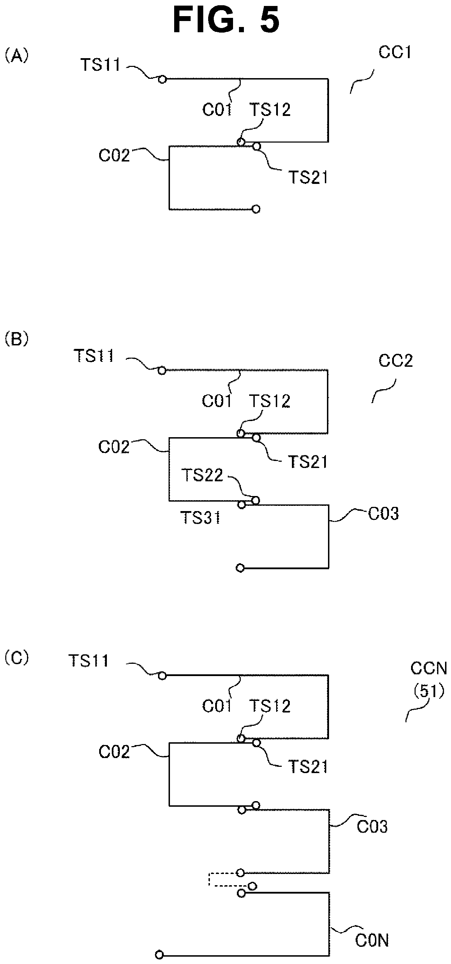

For example, a method for forming the first helical structure body 51 by pressure welding a plurality of coil pieces C which have a U-shape such as illustrated in FIG. 3(D) in succession will be specifically described with reference to FIGS. 4 and 5. In the following description, a helical structure body formed by continuously joining (connecting) a plurality of coil pieces (flat conductors) C but yet to complete the first helical structure body 51 (helical structure body to which a coil piece or pieces C is/are still to be connected) shall also be included in coil pieces C. More specifically, in the following description, coil pieces C include both minimum units of coil pieces (unconnected coil pieces) which have a straight shape or including one or more direction changing portions TN in the strip longitudinal direction and coil pieces formed by connecting a plurality of minimum units of coil pieces to form a helical structure longer than a region CR for one turn of the first helical structure body 51 to be completed. For convenience of description, minimum units of coil pieces will be referred to as unit coil pieces C0 (C01, C02, C03, ..., C0N), and welded articles of coil pieces formed by connecting a plurality of unit coil pieces C0 but yet to complete the first helical structure body 51 to be completed will be referred to as welded coil pieces CC (CC1, CC2, ..., CCN) if a distinction is necessary.

FIGS. 4(A) to 4(C) are plan views seen in the helical axis direction of the first helical structure body 51. FIG. 4(D) is a side view corresponding to FIG. 4(A), FIG. 4(E) to FIG. 4(B), and FIGS. 4(F) and 4(G) to FIG. 4(C), as seen from below in FIGS. 4(A) to FIG. 4(C), for example.

As illustrated in FIGS. 4(A) and 4(D), two U-shaped unit coil pieces C01 and C02 are prepared to form a region CR1 for the first turn of the first helical structure body 51.

As illustrated in FIG. 4(B) and 4(E), the two U-shaped unit coil pieces C01 and C02 can form a region for one hypothetical turn of the helical structure body (indicated by double-dotted dashed lines in FIG. 4(B)); hereinafter, a hypothetical one-turn region CR') with the end faces TS12 and TS21 on either one side of their respective straight portions STR in the strip longitudinal direction (helical traveling direction) being in contact with each other (before pressure welded).

The unit coil pieces C01 and C02 are then held by a not-illustrated welding apparatus (pressure welding apparatus), and the one end face TS12 of the unit coil piece C01 and the one end face TS21 of the unit coil piece C02 are butted against each other and pressed (cold pressure welded) along the pressing direction P to form a welded coil piece CC1 (FIGS. 4(C) and 4(F)). For example, the welding apparatus here presses the end faces TS12 and TS21 of the unit coil pieces C01 and C02 against each other to reduce the lengths of the straight portions STR so that the length of the one-turn region (welded one-turn region) of the welded coil piece CC1 becomes the same as that of the one-turn region CR of the coil 10 (indicated by dot-dashed lines).

In other words, the unwelded unit coil pieces C01 and C02 are set so that the length along the pressing direction P (length LS of the long-side area of the hypothetical one-turn portion CR' illustrated in FIGS. 4(B) and 4(E)) is longer than the length along the pressing direction P (length LE of the long-side area of the one-turn portion CR illustrated in FIGS. 4(C) and 4(F)) after the welding (in a completed state) by the amount of pressure welding CPL. Since each unit coil piece C0 is set to be longer by the amount of pressure welding CPL before welding, the end face side other than that is to be welded (in this example, the other end face TS11 side of the unit coil piece C01, etc.) interferes. The other end face side is thus welded by (temporarily) elastically deforming and/or plastically deforming at least either one of the coil pieces C0.

As illustrated in FIG. 4(C), a pressure-welded portion 15 of the unit coil pieces C01 and C02 is formed on both the straight portions STR (areas excluding the direction changing portions TN [corner portions]). In other words, the welded portion 15 is not included in the direction changing portions TN (corner portions).

As illustrated in FIG. 4(F), burrs 60 protruding in a direction perpendicular to the wider surface WS of the coil piece C are formed on the welded portion 15 by the pressing. After the formation of the welded portion 15, the burrs are therefore removed by cutting or grinding as illustrated in FIG. 4(G). As mentioned above, the welding portion 15 is actually difficult to visually observe (invisible) but is illustrated in a solid line for convenience of description.

The subsequent coil pieces C are similarly connected. FIG. 5 includes diagrams illustrating the connection state in a simplified manner, or schematic development views seen in the axial direction of the first helical structure body 52. FIG. 5(A) corresponds to FIG. 4(C).

In FIG. 5(B), the unit coil piece C02 is connected to the welded coil piece CC1 illustrated in FIG. 5(A). More specifically, the unit coil piece C03 with the same shape as that of the unit coil piece C02 is prepared, and the other end face TS22 of the welded coil piece CC1 (for example, a unit coil piece C02) and one end face TS31 of the unit coil piece C03 are similarly cold pressure welded to form a welded coil piece CC2. After the pressure welding, the welded portion 15 is deburred.

Subsequently, the pressure welding and the deburring are repeatedly performed as necessary for a predetermined number N of turns, whereby the first helical structure body 51 including the one-turn regions CR for N turns is formed (FIG. 5(C)). The one-turn regions CR of the first helical structure body 51 have a substantially rectangular shape (see FIG. 1(A)).

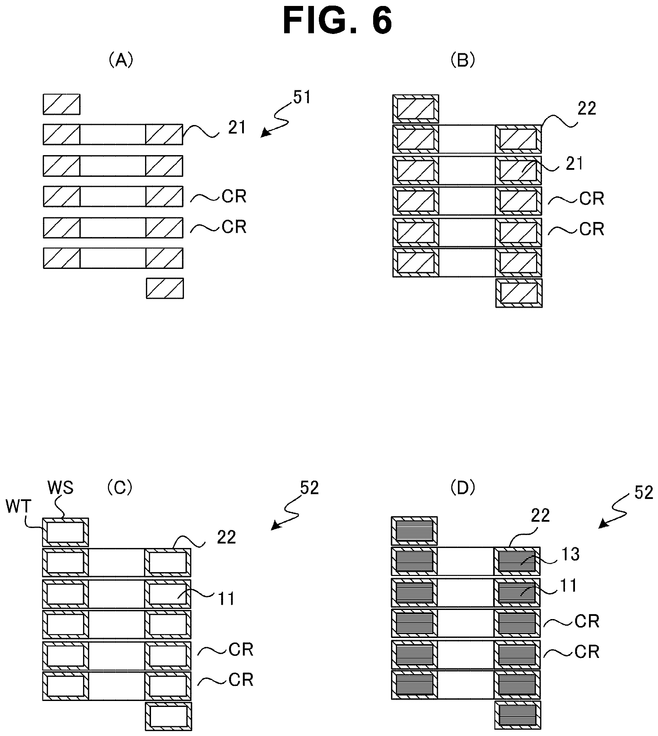

FIG. 6 includes schematic diagrams for describing a method for forming the second helical structure body 52, or cross-sectional views corresponding to the cross section taken along line X-X of FIG. 1(A) (FIGS. 1(C) and 1(D)).

FIG. 6(A) is a sectional view of the first helical structure body 51 completed in FIG. 5(C). With the one-turn regions CR of the first helical structure body 51 separated from each other as illustrated in FIG. 6(A), the entirety is coated with the second metal member 22 (FIG. 6(B)). For example, the second metal member 22 is a metal different from the first metal member 21, preferably a metal with high conductivity. An example is copper (Cu). Specifically, the surface of the first metal member 21 is coated with the second metal member 22 over the entire long helical structure. The second metal member 22 is continuously and uniformly attached to the surface of the first metal member 21 by a technique such as plating. A two-layered helical structure body of the first metal member 21 and the second metal member 22 is thereby formed.

Subsequently, as illustrated in FIG. 6(C), only the first metal member 21 inside is removed to form the second helical structure body 52 of the second metal member 21 which has the hollow inside 11. The first metal member 21 is removed, for example, by dissolving the first metal member 21 using a chemical agent or the like, and discharging the dissolved first metal member 21 outside. For example, if the first metal member 21 is Al, the first metal member 21 can be dissolved using an acidic or basic aqueous solution, etc. This is not restricted, and the first metal member 21 may be removed by physical shaving (extrusion).

As a result, only the second metal member 22 remains as the flat conductor 22 illustrated in FIG. 1, whereby the second helical structure body 52 with the hollow inside (helical structure 52 illustrated in FIG. 1) is formed. In other words, the one-turn regions CR (both inner and outer peripheral areas) of the second helical structure body 52 have a substantially rectangular shape similar to that of the first helical structure body 51.

If the coil pieces C constituting the first helical structure 51 are flat conductors, the second helical structure 52 is a flattened pipe of substantially rectangular shape (or substantially O-shape of a curved-cornered rectangle). When the second helical structure body 52 cut in a direction intersecting (orthogonal to) the traveling direction of the helical structure (strip longitudinal direction), the cut section includes two opposed wider surfaces WS and two opposed narrower surfaces WT.

The inside 11 of the second helical structure body 52 includes a hollow area continuous from one end to the other end of the second helical structure body 52 in the helical traveling direction (from the starting end to the terminal end of the flat conductor 22 in the longitudinal direction) without shielding or disconnection at any point.

The second metal member 22 is desirably formed of a material that will not be altered and/or deteriorated in shape or characteristics by the removal of the first metal member 21 (for example, removal by dissolving). However, if, for example, the first metal member 21 is physically removed, the first metal member 21 and the second metal member 22 may be the same homogenous members.

Furthermore, as illustrated in FIG. 6(D), the liquid 13 serving as a refrigerant (an operating fluid) is injected into the inside 11 of the second helical structure body 52 (if necessary). In such a case, though not illustrated in the drawings, a terminal or the like is connected to only one end of the second helical structure body 52, for example. With the one end closed, the liquid 13 is then injected from the other open end. In such a case, the terminal may be connected (welded) to the coil piece C at the end of the first helical structure body 51 in advance (a new coil piece C may be connected to the terminal-connected coil piece C). After the injection of the liquid 13, a terminal or the like is also connected to the other end to seal the liquid 13 in the inside 11 of the second helical structure body 52.

The liquid 13 may be injected into the inside 11 with both ends of the second helical structure body 52 open, and terminals or the like may be connected to the respective ends.

The second helical structure body 52 and the terminals are connected by pressing (for example, cold pressure welding) as with the mutual connection of the coil pieces C.

The entire second helical structure body 52 except for both terminal portions is then coated with a not-illustrated resin, for example. The regions CR for the respective turns of the helical structure are individually coated with the resin. The one-turn regions CR overlapping in the axial direction (the one-turn region CR in a layer and the one-turn region CR in a layer continuous with the layer) are insulated by the resin (not illustrated).

In such a manner, the coil 10 of the present embodiment is formed. Since the second helical structure body 52 constituting the coil 10 with the completed diameter is formed as a film on the first helical structure body 51, the second helical structure body 52 has no connection portion and is continuous in the helical traveling direction with a (substantially) uniform thickness.

In other words, the coil 10 has no connection portion anywhere in the helical traveling direction even though the one-turn regions CR of the (second) helical structure body 52 thereof have a substantially rectangular shape. In a configuration where a plurality of coil pieces C are flatly connected using an adhesive (such as a fixing material and brazing) or connected by welding etc., the identification of a resistance value and the like inevitably changes (is unstable) in the connection portions. By contrast, according to the present embodiment, the absence of connection portions can prevent any problem occurring from the presence of connection portions.

Since the shape (in particular, inner peripheral shape) of the coil 10 in its plan view (FIG. 1(A)) (in particular, the shape on the inner peripheral side) can be made substantially rectangular, the space factor of the coil 10 can be improved when attached to a motor stator, for example. This can reduce the resistance and improve the efficiency of the motor using the coil 10.

Moreover, not only the outer shape of the coil 10 but the hollow inside 11 can thus further improve the heat dissipation performance by the principle of the heat pipe and reduce an increase in the resistance of the coil 10 due to heat accumulation. This can improve the efficiency of a coil apparatus such as a motor.

The heat dissipation performance can be further improved by injecting a refrigerant (an operating fluid) into the inside 11.

In addition, since the inside 11 of the coil 10 is hollow, the coil 10 can be reduced in weight as compared to the case where the inside 11 is solid (in a state where the first metal member 21 or the second metal member 22 is present).

The materials of the first metal member 21 and the second metal member 22 are not limited to the foregoing example. For example, the first metal member 21 can be any metal member capable of being subjected to cold pressure welding, such as nonferrous metal materials. Specifically, examples of the first metal member 21 include metal members of aluminum, an aluminum alloy, a copper nickel alloy, brass, zinc, silver, a silver alloy, nickel, gold, and other alloys. The first metal member 21 may be a member including tin plating, silver plating, or nickel plating.

Any of the foregoing metal members can be applied to the second metal member 21. If the first metal member 21 is removed by dissolving, a member whose material does not change and/or deteriorate during the dissolving is selected.

Up to this point, the case where the plurality of coil pieces C constituting the first helical structure body 51 are flat conductors has been described as an example. However, this is not restrictive, and the plurality of coil pieces C may be round wire conductors.

The direction changing portions TN are not limited to the substantially rectangular shape in a plan view, either, and may have a curved shape of predetermined curvature.

Furthermore, the first helical structure body 51 may have a helical structure constituted by winding a long conductor (for example, several times as long as the region for one turn of the helical structure body) formed of the first metal member (such as Al) a plurality of turns. In such a case, the conductor may be a flat conductor or a round wire (or rectangular wire). Even in such a case, the surface of the formed first helical structure body 51 is then coated with the second metal member 22, and the first metal member 21 is removed to form the second helical structure body 52 having the hollow inside 11.

### <Second Embodiment>

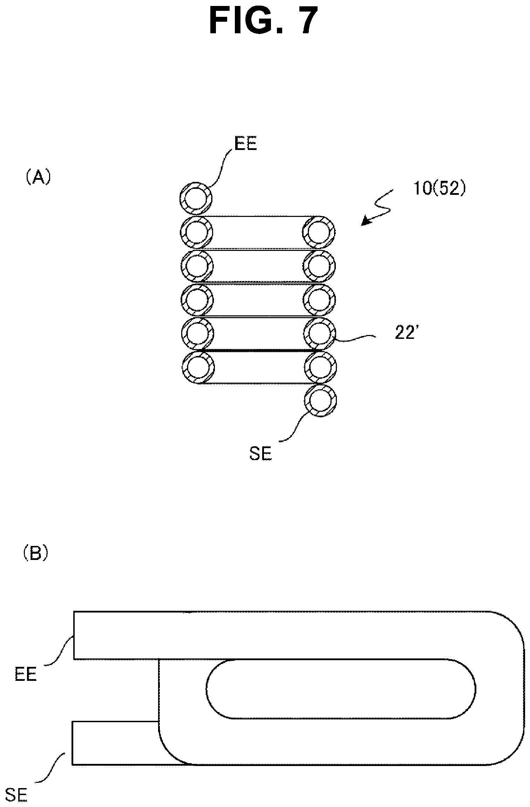

A second embodiment of the present invention will be described with reference to FIG. 7. FIG. 7(A) is a cross-sectional view corresponding to FIG. 1(C). FIG. 7(B) is a plan view corresponding to FIG. 1(A).

The second embodiment demonstrates an example of a coil 10 mainly applicable as a part (electrical element) of a stator (motor) or the like. For example, the coil 10 of the present embodiment is attached to a tooth of a stator core to constitute a stator.

The coil 10 of the second embodiment constitutes a helical structure of a round wire conductor 22', for example. The coil 10 is a so-called concentrated winding coil wound so that the axes of the turns of the helical structure are substantially the same (the turns substantially overlap with the helical axis direction of the coil 10).

Even in such a case, as illustrated in FIG. 1(A), the region CR for one turn of the helical structure body 52 desirably has substantially right-angle corner portions, and is desirably (substantially) rectangular in shape on both the outer and inner peripheral sides when seen in a plan view in the axial direction of the helical structure body 52. However, the corner portions may be rounded in shape as illustrated in FIG. 7(B).

Except that the conductor 22' has a different shape, the coil 10 of the second embodiment is the same as that of the first embodiment. That is, as illustrated in FIG. 7(A), the helical structure has a hollow inside 11. More specifically, 22' constituting the coil 10 is a cylindrical pipe (straw-like pipe) having a substantially circular (or elliptical) cut section when cut in a direction intersecting (orthogonal to) the traveling direction of the helical structure (strip longitudinal direction).

The inside 11 of the helical structure body 52 desirably includes a hollow area continuous from one end to the other end of the helical structure body 52 in the helical traveling direction (from the starting end portion SE to the terminal end portion EE of the conductor 22' in the longitudinal direction) without shielding or disconnection at any point.

Again, though not illustrated, the inside 11 is more desirably filled with a liquid serving as a refrigerant (an operating fluid).

The conductor 22' is not limited to a round wire and may be a rectangular wire (a conductive wire whose sectional shape corresponding to FIG. 7(A) is substantially square).

The coil 10 of the second embodiment can be manufactured in a similar manner to the coil 10 of the first embodiment. More specifically, the end faces of strip-like round conductors (coil pieces) C' formed of the first metal member (for example, Al) in the strip longitudinal direction are successively pressed against each other to form the first helical structure body 51. The surface of the first metal member 21 is coated with the second metal member (for example, Cu) 22, and Al is dissolved to form the second helical structure body 52 with a hollow inside.

Alternatively, the first helical structure body 51 may be formed by winding a long (as long as the first helical structure body 51) round wire conductor 22' formed of the first metal member (for example, Al). The first helical structure body 51 is coated with the second metal member 22, and the first metal member 21 is dissolved to form the second helical structure body 52.

In forming the first helical structure body 51, two coil pieces C to be pressure welded may have end faces TS of different shapes. For example, coil pieces C having end faces TS of different widths (length in the strip transverse direction BS) may be pressure welded to each other. Coil pieces C having different thicknesses (length between wider surfaces WS) may be pressure welded to each other. Coil pieces C having different widths and thicknesses may be pressure welded to each other.

It will be understood that the present invention is not limited to foregoing embodiments, and various changes can be made without departing from the gist of the present invention.

### Industrial Applicability

The present invention can be applied to a stator and a motor.

### Reference Signs List

- 10: coil
- 11: inside
- 13: liquid
- 15: welded portion
- 21: first metal member
- 22: conductor (second metal member)
- 51: first helical structure body
- 52: second helical structure body
- 60: burr

## Claims

1. A coil (10) **characterized by** comprising a helical structure formed of a hollow flat conductor (22).

2. A coil (10) constituting a stator, **characterized in that** a helical structure is formed of a hollow conductor (22).

3. The coil (10) according to claim 1 or 2, **characterized in that** an inside (11) of the helical structure is filled with a liquid (13).

4. The coil (10) according to any one of claims 1 to 3, **characterized in that** a region for one turn (CR) of the helical structure has a substantially rectangular shape.

5. A method for manufacturing a coil (10), **characterized by** comprising:
a step of forming a first helical structure body (51) of a first metal member (21);
a step of coating a surface of the first metal member (21) with a second metal member (22); and
a step of removing the first metal member (21) to form a second helical structure body (52) of the second metal member (22) that is hollow.

6. The method for manufacturing a coil (10) according to claim 5, **characterized by** comprising dissolving and discharging the first metal member (21).

7. The method for manufacturing a coil (10) according to claim 6 or 5, **characterized by** comprising filling an inside (11) of the second helical structure body (52) with a liquid (13).

8. The method for manufacturing a coil (10) according to any one of claims 5 to 7, **characterized by** comprising
preparing a plurality of strip-shaped conductors (C) formed of the first metal member (21); and
successively pressing end faces (TS) of the conductors (C) in a strip longitudinal direction (BL) to form the first helical structure body (51).

9. The method for manufacturing a coil (10) according to claim 8, **characterized by** comprising a step of removing a burr (60) generated by pressing.

10. The method for manufacturing a coil (10) according to any one of claims 5 to 9, **characterized in that** the first helical structure body (51) and the second helical structure body (52) are formed in a substantially rectangular shape as a region for one turn (CR).

11. The method for manufacturing a coil (10) according to any one of claims 5 to 10, **characterized in that** the first helical structure body (51)is a flat conductor (22).

12. The method for manufacturing a coil (10) according to any one of claims 5 to 11, **characterized by** comprising a step of coating the second helical structure body (52) with a resin.
